# EUROPEAN PATENT SPECIFICATION

(11) **EP 3 295 835 B1**
(45) Date of publication and mention of the grant of the patent: **16.08.2023**
(21) Application number: 16725551.2
(22) Date of filing: 04.05.2016
(51) Int. Cl.: A23P 30/20, A47G 21/18, A23G 3/50

(54) **EDIBLE STRAW FOR DRINK CONSUMPTION**
ESSBARER STROHHALM ZUM KONSUM EINES GETRÄNKS
PAILLE COMESTIBLE SERVANT À CONSOMMER DES BOISSONS

(30) Priority: 08.05.2015 ES 201530630
(43) Date of publication of application: 21.03.2018
(73) Proprietor: Sorbo MJV S.L., 08105 Barcelona (ES)
(72) Inventor: JUVIÑA, Enric, 08105 Barcelona (ES); ZORZANO, Carlos, 08105 Barcelona (ES); SANCHEZ TOLEDO, Victor, 08105 Barcelona (ES); BARAFFE, Michael, 08105 Barcelona (ES); MONFERRER BALLESTER, Albert, 08013 Barcelona (ES)
(74) Representative: Isern Patentes y Marcas S.L.
(86) International application number: PCT/ES2016/070342
(87) International publication number: WO 2016/181004

(56) References cited:
- WO-A1-96/20604
- US-A1- 2004 013 772
- US-A1- 2005 037 112
- US-A1- 2006 286 214
- US-A1- 2014 057 024
- US-A1- 2014 161 944

## Description

### FIELD OF THE INVENTION

The present invention falls within the field of foodstuffs.

Specifically, the present invention falls within the field of straws made of an edible and biodegradable material for drink consumption and methods for obtaining such straws.

### BACKGROUND OF THE INVENTION

A "straw" commonly refers to a thin tube or similar artificial pipe for sucking up liquids, especially drinks.

Thus, straws are well known and widely used for drink consumption. Generally, drinking straws comprise an elongated cylindrical pipe defining a lumen through which a liquid drink may be channelled into the mouth of a consumer.

Thus, the drinking straw is a tool used to transfer a liquid from one place to another, usually used in drinks, such as to transfer liquids from a glass to the mouth. The Sumerians made the most primitive straws from plant stems. In various cultures dry and hollow reeds were used for similar purposes, being the stems or straw (of various thicknesses) of wheat, barley or rye, among others, the most widely used, and hence the name of straws for the thin ones.

Straws were initially offered to the market as an option to reduce the risk of catching a disease from improperly washed containers, glasses and cups.

Essentially, the straw comprises a distal end that is submerged in the drink to be consumed, the latter being drawn upwards by a vacuum force created by the mouth of the user on the opposite end of the straw.

Straws consisting of a hollow pipe or channel, through which the liquid comes out, generally made of plastic or polyethylene, straight or accordionshaped at the tip to form an elbow, are also well known.

The vast majority of drinking straws are made of plastic. However, these types of plastic straws have a number of significant problems: for example, they are not biodegradable. In addition, these plastic straws are discarded after use, being a major source of pollution.

Furthermore, the fact that it is a disposable product means that it has neither functionality nor contributes to the food in which it is introduced. Therefore, besides its mechanical functionality (facilitating drink intake), it could have an additional functionality related to organoleptic and nutritional aspects.

For this reason, the inventors of the present invention have developed a functional straw having the basic technical advantages of being biodegradable and remaining rigid without deforming even when submerged in cold drinks for a period of time up to 1 hour, without releasing colorants into the drink and without aromatising it or altering its organoleptic characteristics. That is, the straw object of the present invention is very stable over time and fully functional, as it allows the user to use it for a suitable period of time without releasing substances into the drink in which it is inserted (neither colorants nor aromas nor flavours).

The inventors of the present invention have conducted a search to find the most relevant background regarding edible straws.

In the searches conducted for Spain, no patent documents have been found describing an edible straw, but straws including within them compositions of active substances such as vitamins and other nutritional substances for oral administration have indeed been found. For example, the Spanish patent ES2286422 describes a way for oral administration of active substances, vitamins and/or nutritional substances, which are retained in a section of a straw, so that when sucking the liquid the formulation is dissolved and consumed by the user.

Within Spain, the state of the art describes various stirrers and teaspoons that may contain substances to be dissolved or even be edible and dissolved when stirring the drink. One example of this case is the Spanish utility model ES1059718U, which describes an edible sweetener teaspoon preferably intended for use in the consumption of herbal teas and other drinks. The teaspoon has a functional part (1), oval-shaped or similar, made from a sweetener material in solid and firm state, but dissolvable in a liquid, while the handle (2) consists of a piece of a solid state and edible product coupled to the functional part (1) by means of a firm attachment until the dissolution of said part. However, the tool itself is not eaten.

Regarding international-level searches, some documents describing edible straws have been found. For example, the document US2006286214A1 relates to an edible drinking straw having a first layer of a fruit film coated with a solution of zein (which is a protein), and rolled up in a spiral. Subsequent layers of the fruit film can be rolled up over the first layer, each subsequent layer being attached to the previous layer with an adhesive. However, this American application has a different composition, since no fruit film is used but rather sugars as main component. Further, the straw object of the present invention, unlike the American patent, is not formed of layers, since, as a result of extrusion, a single cylindrical piece is obtained, wherein the fact of having a smooth surface provides the advantage of being able to screen-print on it by means of laser techniques, which provides a marketing advantage.

Furthermore, the inventors of the present invention have found the document US2004013772A1, which relates to an edible drinking straw with fortifying nutritional supplements. This American invention describes a straw rich in edible nutrients to use in drink consumption. The straw can have one or more tablets, fruit powders of natural flavour, natural colour and moisturising properties. The straw is manufactured by extrusion, it may be coated with wax, and the rate at which it is dissolved in the drink can be regulated by the formulation thereof. As with the other American patent, the composition is different from the object of the present invention since no fruit film is used, but rather sugars as the main component. Furthermore, the straw object of the present invention, unlike the American patent, is not formed by layers, since, as a result of extrusion, a single cylindrical piece is obtained, wherein the fact of having a smooth surface provides the advantage of being able to screen-print on it by means of laser techniques, which provides a marketing advantage.

Documents US2014161944A1 and US2014057024A1, which differ one from the other in the set of claims, disclose compositions and methods for preparing edible cups and other edible containers or drinkware such as straws. The compositions comprise liquid, sugar and one or more hydrocolloids which preferably are agar, carrageenan and pectin, and which compositions may also comprise additional ingredients such as vegetable glycerine, CaCl₂ and citric acid. In some of the compositions for making edible cups which are disclosed, the liquid is water. In such cases, water percentage by weight is 67.22% or 62.25%, sugar percentage by weight is 27.94% or 25.8% and agar (0.78% or 0.72% by weight) and pectin (0.40% or 7.76% by weight) are present, as well as carrageenan (2.65% or 2.5% by weight). Cups can be prepared by a method that comprises adding the components sequentially, while heating them up at 150°F - 200°F (65°C . 100°C) to dissolve them and, when the mixture is at around 180°F (80°C), it is poured in a mold to allow it to harden.

Given the above, the inventors of the present invention have decided to obtain a straw with the advantage that it is durable enough for a reasonable period of time without dissolving or disintegrating.

### DETAILED DESCRIPTION OF THE INVENTION

The present invention relates to a straw made of an edible material for drink consumption that overcomes the limitations of the state of the art and has the following advantages:
- Versatility: it may be used in different types of drinks and have different flavours and/or aromas.
- Durability: it will not come apart when submerged in the drink.
- Flavour: the straw should have flavour but not undermine the flavour of the drink in which it is submerged. The flavours, by way of example and not limitation, are grapefruit, lime, lemon, orange, strawberry and salty flavour.

- Texture/Feel: the feel of the straw should be pleasant and not sticky.
- Aesthetics: the straw should be eye-catching and be set apart from a conventional straw.
- Rigidity: it should remain rigid in contact with the liquid.
- Hygiene: it should comply with food regulations.

After evaluating various options, the researchers chose to try to use the paste for pastillage used in confectionery as base. Pastillage is a confectionery decoration characterised by forming a mouldable paste that, when dry, is rigid and hard. Icing sugar is its main ingredient. The traditional recipe mixes the icing sugar with gelatin and allows for the incorporation of aromas and colorants.

For the present invention the pastillage base formula has also been modified so that it can be extruded in an "Italian-pasta-type" machine.

The present invention relates to a straw made of an edible material for drink consumption comprising the following ingredients as further specified in claim 1:

| Types of ingredients: | Examples of ingredients |
|---|---|
| Water: | |
| Gelling agent: | Gelatin, carrageenan, mixtures thereof |
| Sweetening agent: | Cane sugar, refined sugar, icing sugar, brown sugar, fructose, honey, steviol, sucrose and mixtures thereof |
| Stabilising/thickening agent: | Locust bean gum, alginates, carboxymethylcellulose and mixtures thereof |
| Plasticising/humectant agent: | Glycerine, sorbitol, glycerol and mixtures thereof |

The functions of each of the ingredients are as follows:
- Water: Necessary for gelatin and carboxymethylcellulose to moisturise and to perform their function.
- Gelling agent: it forms a flexible protein framework that holds together the other ingredients providing plasticity and flexibility.
- Sweetening agent: (icing sugar as preferred form) it provides structure when dried. It forms the frame of the small tube. It gives flavour. It keeps because the water activity in these concentrations is very low.
- Stabilising/thickening agent: It facilitates, along with the gelling agent such as gelatin, the formation of the paste or conglomerate with the other ingredients. When dried it tends to form a film that provides rigidity to the small tube. It facilitates extrusion.
- Plasticising/humectant agent: It prevents the small tube from breaking apart when extruded or dried.

The straw object of the present invention comprises at least the following ingredients as further specified in claim 1 and in the following percentages by weight of the total of the composition, such that the total amount thereof does not exceed 100 % of the composition:

| Ingredients: | Weight % |
|---|---|
| Water: | 3 % - 15 % |
| Gelling agent: | 0.5 % - 2% |
| Sweetening agent: | 75 % - 90 % |
| Stabilising/thickening agent: | 0.5 % - 2 % |
| Plasticising/humectant agent: | 0.10 % - 1.5 %, |

Preferably the gelling agent is gelatin, the sweetening agent is icing sugar, the stabilising agent is carboxymethylcellulose and the plasticising agent is glycerine. In one embodiment the straw of the present invention additionally comprises aromas (which provide flavour and characteristic smell,) flavours and/or colorants (which provide the identifying colour of the corresponding flavour). In another embodiment the straw of the present invention additionally comprises moistening agents (which improve the texture and the organoleptic properties), such as fruit juice, milk, etc.

The aromas and colorants are accessories and may vary depending on the final product obtained. Table 1 below shows a list of possible aromas and colorants, which by no means has been included by way of limitation:

| **TABLE 1** | | Weight % * |
|---|---|---|
| STRAWBERRY | Aroma | 0.30 |
| | Colour | 0.01 |
| LEMON | Aroma | 0.60 |
| | Colour | 0.01 |
| LIME | Aroma | 0.60 |
| | Colour | 0.10 |
| ORANGE | Aroma | 0.80 |
| | Colour | 0.10 |
| GRAPEFRUIT | Aroma | 1.10 |
| | Colour | 0.05 |

| | | |
|---|---|---|
| (*) The percentage doses of aromas and colours may be adjusted depending on the desired result. | | |

The researchers conducted several studies in order to determine the list of essential ingredients of the edible straw formulation.

Among the tests conducted to reduce the rigidity of the straw initially obtained, it was decided to use a controlled drying method, so that the product was less dried. The resulting small tube was no longer rigid, was more pleasant to chew, and still lasted long enough submerged in the drink. Unfortunately the straw obtained was somewhat friable and cracked under pressure. For this reason the straw formulation was changed again to prevent friability.

Finally, it was concluded that the optimum straw and therefore object of the present invention comprises at least the following ingredients in the following percentages by weight of the total of the composition, such that the total amount thereof does not exceed 100 % of the composition:

| Ingredients: | Weight % |
|---|---|
| Water: | 3%-15% |
| Gelling agent: | 0.5 % - 2 % |
| Sweetening agent: | 75 % - 90 % |
| Stabilising/thickening agent: | 0.5 % - 2 % |
| Plasticising/humectant agent: | 0.10 % - 1.5 %, |

wherein the the different ingredients are selected as specified in claim 1.

The straw object of the present invention has the substantial technical advantage of remaining rigid without deforming in cold drinks for a period of time up to 1 hour, without releasing colorants into the drink and without aromatising or altering the organoleptic characteristics of the drink.

The present invention also relates to a method for obtaining the edible straw.

To determine the key steps of the method the inventors of the present invention conducted different tests mixing various ingredients and evaluating the ability of the pastes to be extruded, dried and moisture resistant when submerged both in a soft drink and an alcoholic drink.

Thus, the method for obtaining the edible straw of the present invention comprises the steps of:
a) Preparing a paste,
b) Extruding the paste at a temperature range between 5 and 50 °C, obtaining a primary small tube or straw,
c) Pre-drying the paste extruded in step b) with cold air at a temperature between 0 °C and 10 °C for a period of time of 2 to 10 minutes.
d) Cutting the small tube to the desired size, and
e) Drying the small tube in an oven at a temperature range between 40 °C and 80 °C for 2-3 hours until obtaining a maximum moisture of 12 %.

Additionally the method obiect of the present invention may comprise the steps of:
f) Screen-printing with laser, a step which provides marketing advantages to the product, since it allows advertising to be included on the straw, and
g) Packaging.
   In turn, step a) of the method (preparing the paste) may comprise the following sub-steps:
   a.1) Cold moisturising of a gelling agent with water,
   a.2) Pre-mixing a stabilising agent with sugar,
   a.3) Heating the water with the gelling agent to 50-60 °C to dissolve it,
   a.4) Adding the solution of step a.3) and the pre-paste of step a.2) in a kneader,
   a.5) Kneading at a temperature between 25 and 35 °C and adding more gelling agent to the product obtained in step a.4), and
   a.6) Continuing to knead and adding the rest of the sugar until a homogeneous paste is obtained.

Preferably aromas and colorants are added. If the aromas and colorants are in solid state they are additionally added in step a.2) and if the aromas and colorants are in liquid state they are additionally added in step a.6).

Important aspects to consider: During the kneading it is preferable to maintain a temperature between 25-35 °C. If the temperature is lower, the paste becomes very thick and hard to work with, but if the kneader is able to work it, there is no problem with it being colder. If the temperature is higher, the paste is fluid and sticky. It will then have to rest before extrusion, making it more difficult to empty the hopper.

### 2. Extrusion process:

The temperature of the paste to be extruded should be adjusted according to the characteristics of the extruder and drying line/area. The colder the paste enters, the harder the extrusion is, but the earlier it can be cleanly cut.

In the tests conducted in laboratory, the researchers extruded in a range between 20 and 50 °C because the test extruder could not work with very compact paste. If the industrial machine is capable of doing so, it is better to work with the paste colder, for example between 5 and 50 °C, to facilitate cutting and drying. After the extrusion process a primary small tube or straw is obtained.

### 3. Pre-drvina:

It is a step prior to subsequent cutting and drying. The inventors of the present invention have found that they obtain a better result cutting when pre-drying in a tunnel is performed. Preferably the step of pre-drying is performed with cold air at a temperature between 0 °C and 10 °C for a period of time of 2 to 10 minutes.

### 4. Cutting and drying:

The cutting of the small tube or primary straw should be performed when the paste is not hot since the walls of the cutting area would stick. If the machine can extrude with the paste cold, there will be no problem.

A few minutes after extrusion, the small tubes are superficially dried and are dry to the touch and flexible. If a rigid, hard and fully dry small tube is desired, it should be placed in a drying tunnel (or in a conditioned chamber and dried on trays) to remove the added water. The temperature and drying time depend on the tunnel characteristics, the air renewal, the fan power and the relative moisture of the air flowing. In the laboratory tests, drying was carried out in an oven at a temperature range between 40 °C and 80 °C for 2-3 hours (static and non-renewed air) until obtaining a maximum moisture of 12 %.

### 5. Screen-printing, burning with laser:

This step provides marketing advantages to the product, since it allows advertising to be included on the straw.

### 6. Packaging and preserving:

Moisture is the main enemy of this product. This is a very stable product as it has very low water activity (a_{w}), such that microorganisms cannot grow. The small tubes should be packaged cold (to avoid condensation) and in a moisture-impermeable packaging.

If condensation appears in the packaging or it is permeable to moisture, mould or yeast could grow on the surface of the small tube.

It is recommended to keep the product in a cool, dry place. It is advisable to instruct the end users not to store or keep them next to machines that are heated, such as coffee makers.

An object of the present invention is therefore a straw according to claim 1.

According to an embodiment the straw additionally comprises aromas, flavours and/or colorants.

According to another embodiment, the straw additionally comprises moistening agents.

According to another object, the invention relates to a method for obtaining the edible straw of any of claims 1-4 as defined in claim 5.

According to a preferred embodiment the method may comprise the following steps:
f) Screen-printing with laser to include advertising on the straw, and
g) Packaging.

According to a preferred embodiment the step a) may comprise the following sub-steps:
a.1) Cold moisturising of a gelling agent with water,
a.2) Pre-mixing a stabilising agent with sugar,
a.3) Heating the water with the gelling agent to 50-60 °C to dissolve it,
a.4) Adding the solution of step a.3) and the pre-paste of step a.2) in a kneader,
a.5) Kneading at a temperature between 25 and 35 °C and adding more gelling agent to the product obtained in step a.4), and
a.6) Continuing to knead and adding the rest of the sugar until a homogeneous paste is obtained.

According to another preferred embodiment the method may comprise aromas, flavours and/or colorants are added in a sub-step.

Another preferred embodiment relates to a method in which if the aromas, flavours and/or colorants are in solid state they are additionally added in step a.2) and if the aromas and colorants are in liquid state they are additionally added in step a.6).

According to another preferred embodiment moistening agents are added in a sub-step.

The straw obtained by the above method is characterised in that it remains rigid without deforming in cold drinks for a period of time up to 1 hour.

The straw obtained by the above method is characterised in that it is biodegradable.

### EXEMPLARY EMBODIMENTS

The exemplary embodiments indicated below are provided by way of illustration and not limitation, with the aim of a better understanding of the invention.

### Example 1: Formulation of a sweet edible straw:

A straw object of the present invention is obtained, comprising the following ingredients in the following percentages by weight of the total of the composition, such that the total amount thereof does not exceed 100 % of the composition:

| Ingredients: | Weight % |
|---|---|
| Water: | 3% - 15% |
| Gelatin: | 0.5 % - 2 % |
| Icing sugar: | 75 % - 90 % |
| Carboxymethylcellulose | 0.5 % - 2 % |
| Glycerine: | 0.10 % - 1,5 % |
| Strawberry aromas: | 0.30 % |
| Strawberry colorant: | 0.01 % |

Laboratory tests were conducted, determining that the straw object of the present invention has a substantial technical advantage of remaining rigid without deforming in cold drinks for a period of time up to 1 hour, without releasing colorants into the drink and without aromatising or altering the organoleptic characteristics of the drink, in this case water.

### Example 2: Method for obtaining the straw of example 1

To determine the key steps of the method, the inventors of the present invention conducted different tests mixing various ingredients and evaluating the ability of the pastes to be extruded, dried and moisture resistant when submerged both in a soft drink and an alcoholic drink.

Thus, the essential steps in extended form are:

### a) Paste preparation:

A step comprising in turn the following sub-steps:
a.1) Cold moisturising the gelatin with water,
a.2) Pre-mixing carboxymethylcellulose (CMC) with sugar,
a.3) Heating the water with the gelatin at 50-60 °C to dissolve it,
a.4) Adding the solution of gelatin and the pre-paste of step a.2) in a kneader,
a.5) Kneading at a temperature between 25 and 35 °C and adding the glycerine to the product obtained in step a.4), and
a.6) Continuing to knead and adding the rest of the sugar until a homogeneous paste is obtained.

Preferably aromas and colorants are added. If the aromas and colorants are in solid state they are additionally added in step a.2) and if the aromas and colorants are in liquid state they are additionally added in step a.6).

Important aspects to consider: During the kneading it is preferable to maintain a temperature between 25-35 °C. If the temperature is lower, the paste becomes very thick and hard to work with, but if the kneader is able to work it, there is no problem with it being colder. If the temperature is higher, the paste is fluid and sticky. It will then have to rest before extrusion, making it more difficult to empty the hopper.

### b) Extrusion process:

The temperature of the paste to be extruded should be adjusted according to the characteristics of the extruder and drying line/area. The colder the paste enters, the harder the extrusion is, but the earlier it can be cleanly cut.

In the tests conducted in laboratory, the researchers extruded in a range between 20 and 50 °C because the test extruder could not work with very compact paste. If the industrial machine is capable of doing so, it is better to work with the paste colder, for example between 5 and 50 °C, to facilitate cutting and drying. After the extrusion process a primary small tube or straw is obtained.

### c) Pre-drvino:

It is a step prior to subsequent cutting and drying. The inventors of the present invention have found that they obtain a better result cutting when pre-drying in a tunnel is performed. Preferably the step of pre-drying is performed with cold air at a temperature between 0 °C and 10 °C for a period of time of 2 to 10 minutes.

### d) Cutting and drying:

The cutting of the small tube should be performed when the paste is not hot since the walls of the cutting area would stick. If the machine can extrude with the paste cold, there will be no problem. A few minutes after extrusion, the small tubes are superficially dried and are dry to the touch and flexible.

If a rigid, hard and fully dry small tube is desired, it should be placed in a drying tunnel (or in a conditioned chamber and dried on trays) to remove the added water. The temperature and drying time depend on the tunnel characteristics, the air renewal, the fan power and the relative moisture of the air flowing. In the laboratory tests, drying was carried out in an oven at a temperature range between 40 °C and 80 °C for 2-3 hours (static and non-renewed air) until obtaining a maximum moisture of 12 %.

### e) Screen-printing, burning with laser:

This step provides marketing advantages to the product, since it allows advertising to be included on the straw.

### f) Packaging and preserving:

Moisture is the main enemy of this product. This is a very stable product as it has very low water activity (a_{w}), such that microorganisms cannot grow. The small tubes should be packaged cold (to avoid condensation) and in a moisture-impermeable packaging. If condensation appears in the packaging or it is permeable to moisture, mould or yeast could grow on the surface of the small tube.

It is recommended to keep the product in a cool, dry place. It is advisable to instruct the end users not to store or keep them next to machines that are heated, such as coffee makers.

## Claims

1. A biodegradable straw made of an edible material for drink consumption comprising:
- water in an amount of 3% to 15% weight,
- a gelling agent in an amount of 0.5% to 2% weight selected from the group consisting of gelatin, carrageenan and mixtures thereof,
- sweetening agent in an amount of 75% to 90% weight selected from the group consisting of cane sugar, refined sugar, icing sugar, brown sugar, fructose, honey, steviol and sucrose and mixtures thereof,
- stabilising/thickening agent in an amount of 0.5% to 2% weight selected from the group consisting of locust bean gum, alginates, carboxymethylcellulose and mixtures thereof, and
- plasticising/humectant agent in an amount of 0.10% to 1.5% weight selected from the group consisting of glycerine, sorbitol and glycerol and mixtures thereof,

2. The straw according to claim 1, further comprising aromas, flavours and/or colorants.

3. The straw according to claim 2, wherein the aromas and/or colorants are selected from the group consisting of strawberry, lemon, lime, orange and grapefruit.

4. The straw according to any of claims 1 to 3, further comprising moistening agents.

5. A method for obtaining a biodegradable straw according to any of claims 1-4, comprising the following steps
a) Preparing a paste
b) Extruding the paste obtained in step a) at a temperature range between 5 and 50 °C, obtaining a primary small tube or straw,
c) Pre-drying the paste extruded in step b) with cold air at a temperature between 0 °C and 10 °C for a period of time of 2 to 10 minutes,
d) Cutting the small tube to the desired size, and
e) Drying the small tube in an oven at a temperature range between 40 °C and 80 °C for 2-3 hours until obtaining a maximum moisture of 12 %.

6. The method according to claim 5 **characterized in that** step a) comprises the following steps:
a.1) Cold moisturising of a gelling agent with water,
a.2) Pre-mixing a stabilising agent with sugar,
a.3) Heating the water with the gelling agent to 50-60 °C to dissolve it,
a.4) Adding the solution of step a.3) and the pre-paste of step a.2) in a kneader,
a.5) Kneading at a temperature between 25 and 35 °C and adding more gelling agent to the product obtained in step a.4), and
a.6) Continuing to knead and adding the rest of the sugar until a homogeneous paste is obtained.

7. The method according to any of claims 5-6, further comprising the following subsequent steps:
f) Screen-printing with laser to include advertising on the straw, and
g) Packaging.

8. The method according to claim 5 or 6, wherein aromas, flavours and/or colorants are added in a sub-step.

9. The method according to claim 8, wherein the aromas, flavours and/or colorants are in solid state, and are added in step a.2).

10. The method according to claim 8, wherein the aromas, flavours and/or colorants are in liquid state, and are added in step a.6).

11. The method according to any of claims 5 to 10, wherein moistening agents are added in a sub-step.

## Patentansprüche

1. Biologisch abbaubarer Trinkhalm aus einem essbaren Material für den Getränkekonsum, umfassend:
- Wasser in einer Menge von 3 % bis 15 % Gew.-%,
- ein Geliermittel in einer Menge von 0,5 % bis 2 Gew.-%, ausgewählt aus der Gruppe bestehend aus Gelatine, Carrageen und Mischungen davon,
- Süßungsmittel in einer Menge von 75 % bis 90 Gew.-%, ausgewählt aus der Gruppe bestehend aus Rohrzucker, raffiniertem Zucker, Puderzucker, braunem Zucker, Fruktose, Honig, Steviol und Saccharose sowie Mischungen davon,
- Stabilisierungs-/Verdickungsmittel in einer Menge von 0,5 % bis 2 Gew.-%, ausgewählt aus der Gruppe bestehend aus Johannisbrotkernmehl, Alginaten, Carboxymethylcellulose und Mischungen davon, und
- Plastifizierungs-/Feuchthaltemittel in einer Menge von 0,10 % bis 1,5 Gew.-%, ausgewählt aus der Gruppe bestehend aus Glycerin, Sorbit und Glycerol und Mischungen davon.

2. Trinkhalm nach Anspruch 1, ferner umfassend Aromen, Geschmacksstoffe und/oder Farbstoffe.

3. Trinkhalm nach Anspruch 2, wobei die Aromen und/oder Farbstoffe ausgewählt sind aus der Gruppe bestehend aus Erdbeere, Zitrone, Limette, Orange und Grapefruit.

4. Trinkhalm nach einem der Ansprüche 1 bis 3, ferner umfassend Befeuchtungsmittel.

5. Verfahren zum Erhalten eines biologisch abbaubaren Trinkhalms nach einem der Ansprüche 1-4, umfassend die folgenden Schritte
a) Zubereiten einer Paste
b) Extrudieren der in Schritt a) erhaltenen Paste bei einem Temperaturbereich zwischen 5 und 50 °C, wobei ein primäres Röhrchen oder Trinkhalm erhalten wird,
c) Vortrocknen der in Schritt b) extrudierten Paste mit kalter Luft bei einer Temperatur zwischen 0 °C und 10 °C für eine Zeitspanne von 2 bis 10 Minuten,
d) Schneiden des Röhrchens auf die gewünschte Größe und
e) Trocknen des Röhrchens in einem Ofen bei einem Temperaturbereich zwischen 40 °C und 80 °C für 2-3 Stunden, bis eine maximale Feuchtigkeit von 12 % erhalten wird.

6. Verfahren nach Anspruch 5, **dadurch gekennzeichnet, dass** der Schritt a) die folgenden Schritte umfasst:
a.1) Kaltbefeuchten eines Geliermittels mit Wasser,
a.2) Vormischen eines Stabilisierungsmittels mit Zucker,
a.3) Erhitzen des Wassers mit dem Geliermittel auf 50-60 °C, um es aufzulösen,
a.4) Hinzufügen der Lösung aus Schritt a.3) und der Vorpaste aus Schritt a.2) in einem Kneter,
a.5) Kneten bei einer Temperatur zwischen 25 und 35 °C und Hinzufügen von mehr Geliermittel zu dem in Schritt a.4) erhaltenen Produkt, und
a.6) Weiterkneten und den restlichen Zucker hinzufügen, bis eine homogene Paste erhalten wird.

7. Verfahren nach einem der Ansprüche 5-6, ferner umfassend die folgenden nachfolgenden Schritte:
f) Siebdrucken mit Laser, um Werbung auf dem Trinkhalm anzubringen und
g) Verpacken.

8. Verfahren nach Anspruch 5 oder 6, wobei in einem Teilschritt Aromen, Geschmacksstoffe und/oder Farbstoffe hinzugefügt werden.

9. Verfahren nach Anspruch 8, wobei die Aromen, Geschmacksstoffe und/oder Farbstoffe in festem Zustand vorliegen und in Schritt a.2) hinzugefügt werden.

10. Verfahren nach Anspruch 8, wobei die Aromen, Geschmacksstoffe und/oder Farbstoffe in flüssigem Zustand vorliegen und in Schritt a.6) hinzugefügt werden.

11. Verfahren nach einem der Ansprüche 5-10, wobei in einem Teilschritt Befeuchtungsmittel zugegeben werden.

## Revendications

1. Paille biodégradable fabriquée d'un matériau comestible destinée à la consommation de boissons comprenant :
- de l'eau dans une quantité de 3 % à 15 % en poids,
- un agent gélifiant dans une quantité de 0,5 % à 2 % en poids choisi dans le groupe consistant en la gélatine, le carraghénane et les mélanges de ceux-ci,
- un agent édulcorant dans une quantité de 75 % à 90 % en poids choisi dans le groupe consistant en le sucre de canne, le sucre raffiné, le sucre glace, la cassonade, le fructose, le miel, le stéviol et le saccharose et les mélanges de ceux-ci,
- un agent stabilisant/épaississant dans une quantité de 0,5 % à 2 % en poids choisi dans le groupe consistant en la gomme de caroube, les alginates, la carboxyméthylcellulose et les mélanges de ceux-ci, et
- un agent plastifiant/humidifiant dans une quantité de 0,10 % à 1,5 % en poids choisi dans le groupe consistant en la glycérine, le sorbitol et le glycérol et les mélanges de ceux-ci.

2. Paille selon la revendication 1, comprenant en outre des arômes, saveurs et/ou colorants.

3. Paille selon la revendication 2, dans laquelle les arômes et/ou les colorants sont choisis dans le groupe consistant en fraise, citron, lime, orange et pamplemousse.

4. Paille selon l'une quelconque des revendications 1 à 3, comprenant en outre des agents humidifiants.

5. Procédé pour l'obtention d'une paille biodégradable selon l'une quelconque des revendications 1 à 4, comprenant les étapes suivantes
a) la préparation d'une pâte
b) l'extrudation de la pâte obtenue dans l'étape a) dans une plage de température entre 5 et 50 °C, obtenant un petit tube ou une paille primaire,
c) le pré-séchage de la pâte extrudée dans l'étape b) avec de l'air froid à une température entre 0 °C et 10 °C pour une période de temps de 2 à 10 minutes,
d) le coupage du petit tube à la taille désirée, et
e) le séchage du petit tube dans un four à une plage de température entre 40 °C et 80 °C pendant 2-3 heures jusqu'à l'obtention d'une humidité maximale de 12 %.

6. Procédé selon la revendication 5 **caractérisé en ce que** l'étape a) comprend les étapes suivantes :
a.1) l'humidification à froid d'un gélifiant avec de l'eau,
a.2) le prémélange d'un agent stabilisant avec du sucre,
a.3) le chauffement de l'eau avec le gélifiant à 50-60 °C pour le dissoudre,
a.4) l'ajout de la solution de l'étape a.3) et la pré-pâte de l'étape a.2) dans un pétrisseur,
a.5) le pétrissage à une température entre 25 et 35 °C et le rajout de gélifiant au produit obtenu dans l'étape a.4), et
a.6) la continuation de pétrissage et l'ajouter du reste du sucre jusqu'à l'obtention d'une pâte homogène.

7. Procédé selon l'une quelconque des revendications 5 à 6, comprenant en outre les étapes ultérieures suivantes :
f) la sérigraphie au laser pour inclure de la publicité sur la paille, et
g) l'emballage.

8. Procédé selon la revendication 5 ou 6, dans lequel des arômes, des saveurs et/ou des colorants sont ajoutés dans une sous-étape.

9. Procédé selon la revendication 8, dans lequel les arômes, les saveurs et/ou les colorants sont à l'état solide, et sont ajoutés à l'étape a.2).

10. Procédé selon la revendication 8, dans lequel les arômes, les saveurs et/ou les colorants sont à l'état liquide, et sont ajoutés à l'étape a.6).

11. Procédé selon l'une quelconque des revendications 5 à 10, dans lequel des agents humidifiants sont ajoutés dans une sous-étape.
